# EUROPEAN PATENT APPLICATION

(11) **EP 2 535 762 A2**
(43) Date of publication of application: **19.12.2012**
(21) Application number: 11750906.7
(22) Date of filing: 02.03.2011
(51) Int. Cl.: G02B 27/22, H04N 13/00

(54) **MULTI-LAYER IMAGE DISPLAY DEVICE**

(30) Priority: 04.03.2010 KR 20100019586
(71) Applicant: Tovis Co., Ltd., Yeonsu-gu, Incheon 406-840 (KR)
(72) Inventor: KIM, Yong Beom, Incheon 406-736 (KR); KIM, Yang Rae, Incheon 406-736 (KR)
(74) Representative: Manitz, Finsterwald & Partner GbR
(86) International application number: PCT/KR2011/001446
(87) International publication number: WO 2011/108849

(57) **Abstract**

A multi-layer image display device for realizing a multi-layered image with a depth by overlapping a plurality of two-dimensional images includes: a plurality of screens which are disposed to be overlapped in a forward-backward direction; and one or more projectors which are disposed behind the plurality of the screens to selectively project one or more two-dimensional images on the screens. By using a screen and a projector, the cross stripes of the display can be fundamentally removed so as to prevent the occurrence of the interference pattern (Moire phenomenon) due to the interference of different pixel patterns, and an additional diffuse layer can be omitted so that an assembling process of the multi-layer image display device can be simplified.

## Description

### [Field of the Invention]

The present invention relates to a multi-layer image display device to realize a multi-layered image with a depth by overlapping multiple two-dimensional images.

### [Background Art]

Conventionally, in order to realize a multi-layered image with a depth, a method of overlapping a plurality of liquid crystal display (LCD) panels has been introduced.

In this case, there is a problem that a noise (interference pattern) such as wood grain and water wave due to the interference between the overlapped LCD panels occurs. That is, if a plurality of LCD panels having cross stripes by pixels are closely disposed, a noise occurs by the Moire phenomenon.

Technologies for preventing such noises have been introduced. For example, in Korean Patent registration No. 10-0614419 (Applicant: deep video imaging limited, Title of the invention: Multi-layered display), a diffuse layer for diffusing light is interposed between two LCD panels to remove noise by the overlap of the LCD panels.

However, in case of interposing a diffuse layer between two LCD panels, a process of disposing the diffuse layer between the LCD panels and then assembling the same is required, so an additional assembling process is required and the productivity is deteriorated. In addition, since this method reduces the noise by diffusing cross stripes of the rear LCD panel through the diffuse layer, the occurrence of noise cannot be fundamentally removed.

### [Detailed Description of the Invention]

### [Technical Problem]

The present invention has been made in an effort to provide a multi-layer image display device in which image noise due to the interference between overlapped displays and the assembling thereof is easy.

Further, the present invention has been also made in an effort to provide a multi-layer image display device which has various depths.

### [Technical Solution]

In an exemplary embodiment, a multi-layer image display device for realizing a multi-layered image with a depth by overlapping a plurality of two-dimensional images includes: a plurality of screens which are disposed to be overlapped in a forward-backward direction; and one or more projectors which are disposed behind the plurality of the screens to selectively project one or more two-dimensional images on the screens.

The plurality of the screens may be selectively turned on, and the one or more projectors may be synchronized with the screens so as to be focused with the selectively turned on screen.

One or more projectors of the projectors may alternately project different two-dimensional images on two or more screens among the screens so as to form the different two-dimensional images simultaneously on two or more screens of the screens.

The screens may be a transparent screen of a rear surface projection type.

The one or more projectors may be a LCOS type or a DLP type.

The plurality of the screens may be a PDLC type or a PSCT type.

### [Advantageous Effects]

According to the present invention, by using a screen and a projector, the cross stripes of the display can be fundamentally removed so as to prevent the occurrence of the interference pattern (Moire phenomenon) due to the interference of different pixel patterns, and an additional diffuse layer can be omitted so that an assembling process of the multi-layer image display device can be simplified.

In addition, by selectively projecting one of more two-dimensional image onto the plurality of the screens using one or more projector, so the multi-layered image can have various depths.

### [Brief Description of Drawings]

FIG. 1 is a schematic side view showing a first driving example of a multi-layer image display device according to an embodiment of the present invention.
FIG. 2 is a schematic perspective view showing a second driving example of a multi-layer image display device according to an embodiment of the present invention.
FIG. 3 is a schematic side view showing a third driving example of a multi-layer image display device according to an embodiment of the present invention.
FIG. 4 is a schematic perspective view showing a first driving example of a multi-layer image display device according to an embodiment of the present invention.
FIG. 5 is a schematic perspective view showing a second driving example of a multi-layer image display device according to an embodiment of the present invention.
FIG. 6 is a schematic perspective view showing a third driving example of a multi-layer image display device according to an embodiment of the present invention.

### [Detailed Description of the Embodiments]

Embodiments of the present invention will be explained in detail with reference to the accompanied drawings.

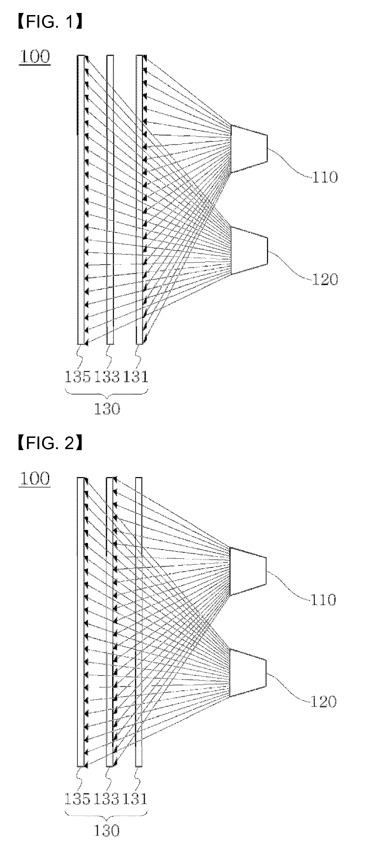

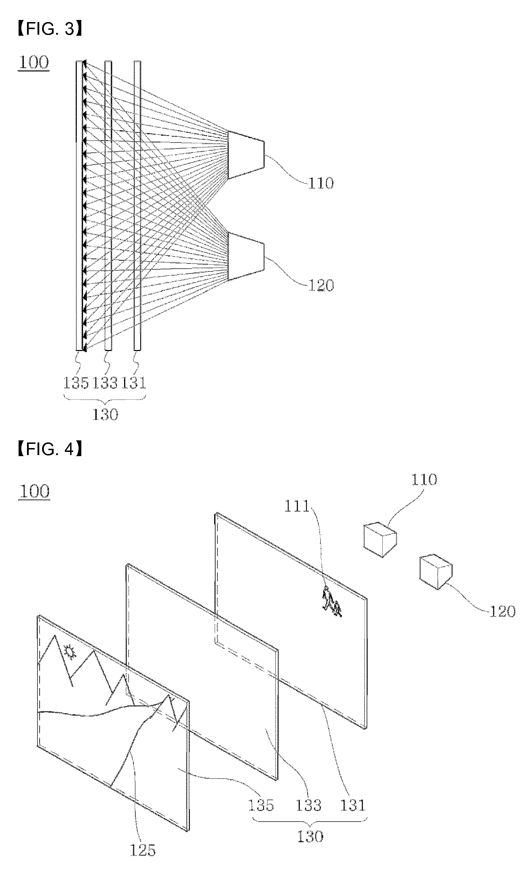

FIG. 1 is a schematic side view showing a first driving example of a multi-layer image display device according to an embodiment of the present invention, FIG. 2 is a schematic perspective view showing a second driving example of a multi-layer image display device according to an embodiment of the present invention, and FIG. 3 is a schematic side view showing a third driving example of a multi-layer image display device according to an embodiment of the present invention.

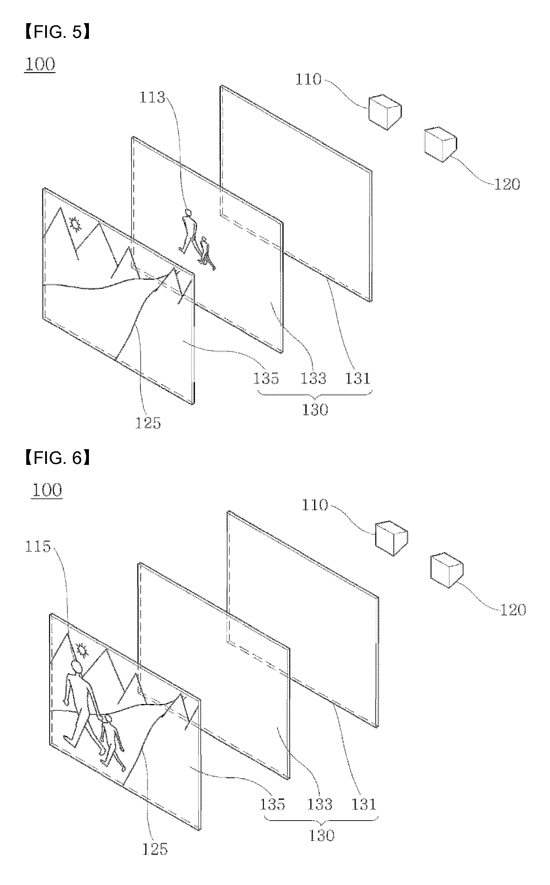

FIG. 4 is a schematic perspective view showing a first driving example of a multi-layer image display device according to an embodiment of the present invention, FIG. 5 is a schematic perspective view showing a second driving example of a multi-layer image display device according to an embodiment of the present invention, and FIG. 6 is a schematic perspective view showing a third driving example of a multi-layer image display device according to an embodiment of the present invention.

As shown in FIG. 1 to FIG. 3, a multi-layer image display device 100 according to an embodiment of the present invention realizes a multi-layered image with a depth by overlapping multi-layered two-dimensional images, and includes a plurality of screens 130 which are overlapped with each other in a forward-backward direction, and one or more projectors 110 and 120 which are disposed behind the plurality of the screens 130 so as to selectively project one or more two-dimensional images 111, 113, 115, and 125 on the rear surface of the plurality of the screens 130.

A conventional device having overlapped LCD panels to realize multi-layered images has a problem that a noise (interference pattern) such as wood grain and water wave due to the interference between the overlapped LCD panels occurs. In order to prevent such noises, a technology in which a diffuse layer for diffusing light is interposed between two LCD panels, but in case of interposing a diffuse layer between two LCD panels, an additional assembling process is required and the productivity is deteriorated. In addition, since this method reduces the noise by diffusing cross stripes of the rear LCD panel through the diffuse layer, the occurrence of noise cannot be fundamentally removed.

In a multi-layer image display device 100 according to an embodiment of the present invention, the plurality of the screens 130 are used instead of two displays and the backlight unit is replaced with one or more projectors 110 and 120, so the problem of the interference pattern can be fundamentally solved and the assembling process is also simplified.

That is, although in the conventional multi-layer image display device the interference pattern is generated by the different pixel patterns of the two overlapped liquid crystal display device, the screens 130 does not have pixels in itself but receives images from the projector 110 and 120 to show the received images, so pixel patterns (cross stripe) are not formed. In addition, in case that a diffuse layer is interposed between the two liquid crystal display panels, the interference pattern is reduced, but in the present invention, the overlapping of the different pixel patterns is removed, so the occurrence of the interference pattern has been basically removed.

Exemplarily, as shown in FIG. 1 to FIG. 6, the plurality of the screens 130 may be three, and one or more projectors 110 and 120 may be two. These are respectively referred to as a first screen 131, a second screen 133, a third screen 135, a first projector 110 and a second projector 120. The projectors 110 and 120 may selected one or more screens from the screens 131, 133 and 135, and may projects one or more two-dimensional images on the selected screens.

For example, referring to FIG. 1 and FIG. 4, the first projector 110 may project a two-dimensional image 111 onto the first screen 131, and the second projector 120 may project the two-dimensional image 125 onto the third screen 135. In this case, since the two-dimensional image 111 on the first screen 131 is formed in a far distance with respect to the two-dimensional image 125 on the third screen 135, the depth effect of the multi-layered image can be enhanced.

Further, referring to FIG. 2 and FIG. 5, the first projector 110 may project a two-dimensional image 113 onto the second screen 133, and the second projector 120 may project a two-dimensional image 125 onto the third screen 135. In addition, referring to FIG. 3 and FIG. 6, the first projector 110 and the second projector 120 may respectively project the two-dimensional images 115 and 125 onto the third screen 135 at the same time. In this case, since the two images 115 and 125 are projected onto the third screen 135 simultaneously, the depth effect of the image can become shallow.

Although it is exemplarily explained in the above that the second projector 120 projects the two-dimensional image 125 only to the third screen 135, the second projector 120 may project images onto the first screen 131 or the second screen 133, if necessary, like the first projector 110.

Referring to FIG. 4 to FIG. 6, as an example of the driving method of the multi-layer image display device 100 according to an embodiment of the present invention, in a state that the two-dimensional image 125 which corresponds to the background image is displayed by the projection of the second projector 120 on the third screen 135, by the phasedly performed examples of the first example (FIG. 4) in which the first projector 110 projects the two-dimensional image 111 that a person comes on foot from the long distance on the first screen 131, the second example (FIG. 5) in which the first projector 110 projects the two-dimensional image 113 that a person comes on foot from a medium distance on the second screen 133, and the third example (FIG. 6) in which the first projector 110 projects the two-dimensional image 115 that a person comes on foot from the short distance on the third screen 135, the depth effect may become more substantial in realizing that image that a person comes on foot from the long distance to the short distance.

At this time, the projector 130 may be a type of LCOS (Liquid Crystal On Silicon) or DLP (Digital Light Processing).

Except the CRT (Cathode Ray Tube) type which is not suitable for common use because of great size, high cost, and great weight, the projector may be divided into LCD (Liquid Crystal Display) type, LCOS type, and DLP type depending on the projection type. Among these types, LCD type has cross stripes similar with the LCD device, and may cause the noise, so it is not preferably applied to the present invention.

In addition, not shown in the drawings, the multi-layer image display device 100 according to an embodiment of the present invention may include various parts for realizing a conventional screen and a projector.

The screens 130 are disposed to be overlapped with each other when they are seen from the front. At this time, the plurality of the screens 130 are fixed to be apart from each other such that images displayed on the screens 130 have a depth. Parts such as a frame for fixing the screens 130 have been omitted.

As such, by using a plurality of the screens 130 and one or more projectors 110 and 120, cross stripe patterns of the display can be removed, so the interference pattern (Moire phenomenon) due to the interference of the pixel patterns can be prevented, and an additional diffuse layer can be omitted, so the assembling process of the multi-layer image display device can be simplified.

Furthermore, the screens 130 may be selectively turned on, and the projectors 110 and 120 may be synchronized with the screens 130 so as to be focused on the selectively turned on screen.

Exemplarily, referring to FIG. 1 to FIG. 6, in the first driving example (FIG. 1, FIG. 4), the first screen 131 and the third screen 135 among the screens 130 are selectively turned on, and the second screen 133 is preferably turned off (generally, to be transparent). As such, in case that the first screen 131 and the third screen 135 are selectively turned on, the first projector 110 is regulated to be focused to project the two-dimensional image 111 onto the first screen 131 and the second projector 120 is regulated to be focused to project the two-dimensional image 125 onto the third screen 135, and these regulations may be accomplished by the synchronization of the first projector 110 and the second projector 120 with the screens 130. Further, in the second driving example (FIG. 2, FIG. 5), the second screen 133 and the third screen 135 among the screens 130 are selectively turned on, and the first projector 110 and the second projector 120 are respectively regulated to be focused with the second screen 133 and the third screen 135. Similarly, the third driving example may be performed in the same way.

For the selective turn on/off of the screen, the screens 220 may be a PDLC (Polymer Dispersed Liquid Crystal) type or a PSCT (Polymer Stabilized Cholesteric Textures) type.

The PDLC type screen is composed of dispersed droplets of solid polymer. The droplets are disorderly disposed in a state that the driving voltage is turned off so that the light is hindered by the refraction of the droplet, and the polymer to be scattered, and the droplets are linearly disposed in a state that the driving voltage is turned on so that the difference of the refraction is reduced to make the screen to be transparent. For example, referring to FIG. 1 and FIG. 4, in order to selectively turn on the first screen 131 and the third screen 135, the driving electric voltage may be applied only to the second screen 133. That is, the driving electric voltage is turned off in the selected screen, the selected screen is selectively turned on so that the two-dimensional images 111 and 125 can be projected on the selected screen

Also, in the PSCT type screen, liquid crystal is arranged in vertical structure by the strong electric field, and thereby light is passed therethrough. For example, referring to FIG. 2 and FIG. 5, in order to selectively turn on the second screen 133 and the third screen 135, the driving electric voltage may be applied only to the first screen 131. That is, if the electric field is selectively turned off for the selected screen, the selected screen is selectively turned on so that the second two-dimensional images 113 and 125 can be projected on the selected screen.

Further, the plurality of the screens 130 may be selectively turned on with respect to the two-dimensional image having the same bandwidth among the two-dimensional images.

Exemplarily, as shown in FIG. 1 and FIG. 4, the case in which the first screen 131 and the third screen 135 are respectively turned on with respect to the first projector 110 and the second projector 120, such that the two-dimensional image projected from the first projector 110 is formed on the first screen 131, and the two-dimensional image projected from the second projector 120 are formed, will be explained. In this case, if the bandwidth of the first screen 131 is equal to the bandwidth of the two-dimensional image 111 projected from the first projector 110 and the bandwidth of the third screen 135 is equal to the bandwidth of the two-dimensional image 125 projected from the second projector 110, the first screen 131 and the third screen 135 can be respectively turned on with respect to the first projector 110 and the second projector 120.

Further, as shown in FIG. 3 and FIG. 6, in order to form the two-dimensional image projected from the first projector 110 and the two-dimensional image projected from the second projector 120 together on the third screen 135, if the bandwidth of the third screen 135 is equal to the bandwidths of the images 125 projected from the first projector 110 and the second projector 120, the third screen 135 can be selectively turned on with respect to the first projector 110 and the second projector 120.

Meanwhile, one or more of the projectors 110 and 120 may alternately project different two-dimensional images on two or more screens 130 so that different two-dimensional images are formed on two or more screens 130. At this time, in order to realize the effect that the different two-dimensional images seem to be formed on the different screens simultaneously, the images are alternately projected at a high speed. For example, the different two-dimensional images may be alternately projected within a limit that the two-dimensional images have the required frame periods on the respective screens.

Exemplarily, the explanation will be made hereinafter on the assumption that only the first projector 110 among the fist projector 110 and the second projector 120 in FIG. 4 and FIG. 5 is provided. In FIG. 4, the first projector 110 alternately projects at a high speed the different two-dimensional images 111 and 125 on the first screen 131 and the third screen 135, respectively, so it performs the operation that is performed by two projectors. Similarly, in FIG. 5, the first projector 110 alternately projects at a high speed the different two-dimensional images 113 and 125 on the second screen 133 and the third screen 135, respectively, so it performs the operation that is performed by two projectors.

That is, one or more projectors 110 and 120 may be formed by only one projector, and the multi-layered image can be realized by alternating projection of the images at a high speed.

The screens 130 may be a transparent screen of a rear surface projection type.

That is, the plurality of the screens 130 may be a transparent screen of a rear surface projection type which receives the two-dimensional image from one or more projectors 110 and 120, which are disposed behind, and allows the images to be seen from the front.

As such, by selectively projecting one or more two-dimensional images on a plurality of the screens 130 using one or more projectors 110 and 120, the multi-layered image can be realized with various depths.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [industrial Applicability]

The present invention relates to an image display device and can be applied to various displays, so the present invention has an industrial applicability.

## Claims

1. A multi-layer image display device for realizing a multi-layered image with a depth by overlapping a plurality of two-dimensional images, comprising:
a plurality of screens which are disposed to be overlapped in a forward-backward direction; and
one or more projectors which are disposed behind the plurality of the screens to selectively project one or more two-dimensional images on the screens.

2. The multi-layer image display device of claim 1, wherein the plurality of the screens are selectively turned on, and the one or more projectors are synchronized with the screens so as to be focused with the selectively turned on screen.

3. The multi-layer image display device of claim 1, wherein one or more projectors of the projectors alternately project different two-dimensional images on two or more screens among the screens so as to form the different two-dimensional images simultaneously on two or more screens of the screens.

4. The multi-layer image display device of one of claim 1 to claim 3, wherein the screens are a transparent screen of a rear surface projection type.

5. The multi-layer image display device of one of claim 1 to claim 3, wherein the one or more projectors are a LCOS type or a DLP type.

6. The multi-layer image display device of one of claim 1 to claim 3, wherein the plurality of the screens are a PDLC type or a PSCT type.
